(19) Europäisches Patentamt
European Patent Office
Office européen des brevets

(11) Publication number: **0 179 941**
**A1**

(12) **EUROPEAN PATENT APPLICATION**

(21) Application number: **84113103.0**

(22) Date of filing: **31.10.84**

(51) Int. Cl.⁴: **C 08 L 33/12**, C 08 L 25/08, C 08 L 55/02

(43) Date of publication of application: **07.05.86**
**Bulletin 86/19**

(84) Designated Contracting States: **BE DE FR GB IT NL SE**

(71) Applicant: **THE DOW CHEMICAL COMPANY, 2030 Dow Center Abbott Road P.O. Box 1967, Midland, MI 48640 (US)**

(72) Inventor: **Keskkula, Henno, 4159 Speck Avenue Unit 283, Austin Texas 78759 (US)**
Inventor: **McCreedy, Kathleen McCarthy, 3411 Sharon Rd., Midland Michigan 48640 (US)**
Inventor: **Maass, Donald A., 822 N. Saginaw Rd., Midland Michigan 48640 (US)**

(74) Representative: **Hann, Michael, Dr. et al, Patentanwälte Dr. Michael Hann Dr. H.-G. Sternagel Marburger Strasse 38, D-6300 Giessen (DE)**

(54) **Transparent blends of polymethylmethacrylate and certain styrene copolymers.**

(57) Transparent blends of polymethylmethacrylate and alkenyl aromatic/vinyl acid copolymer blends and transparent shaped articles made from such blends are taught. The blends contain:

(a) polymethylmethacrylate; and

(b) at least one copolymer of styrene (and/or equivalent alkenyl aromatic monomers) with one or more of certain vinyl acids; and optionally

(c) mass-made acrylonitrile-butadiene-styrene or acrylonitrile-butadiene-styrene-type resin.

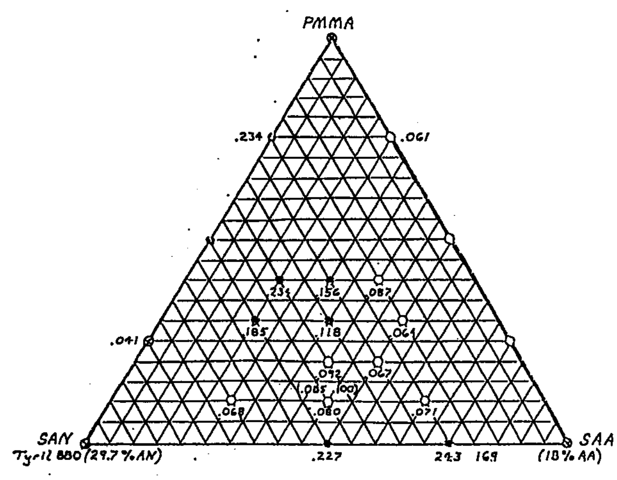

0179941

# TRANSPARENT BLENDS OF POLYMETHYLMETHACRYLATE AND CERTAIN STYRENE COPOLYMERS

It is well known that various synthetic resinous materials are generally incompatible. Because of this, physical admixtures of most given different polymers usually give opaque blended products. The theory and practice of polymer compatibility and blending is documented in "Polymer Blends", Vols. 1 and 2, by D. R. Paul and Seymour Newman, Academic Press Publishers of New York, San Francisco and London (1978).

There is an obvious need for desirable transparent polymer products for various applications including packaging purposes. Oftentimes there is need for better properties in transparent materials than the properties which are available in many of the known normally-transparent polymer products. Such properties as: improved heat deformation temperature characteristics; better adhesion; improved light stability; and the like are advantageous.

It is known that transparent polymer blends may be obtained if the refractive index of each of the component polymers are matched within ±0.005 refractive index units. This is disclosed in U.S. Patent No. 4,083,896. A similar result is often obtained when the component polymers are thermodynamically compatible. Polymethylmethacrylate and various styrene/acrylonitrile copolymers containing between 8 and 28 percent by weight copolymerized acrylonitrile have different refractive index values, but do form transparent blends. This presumably is due to the basic compatibility of the involved polymer species. French Patent No. 1,526,375 is indicative of this.

The art, however, does not provide the reliable direction to advantageous transparent blends involving mixtures of polymethylmethacrylate and copolymeric styrene materials as in the present invention.

The present invention is a transparent, thermoplastic polymeric composition having a light absorbance value in the 640 nanometer wave length that is not greater than 0.12 when said composition, in a solid shaped specimen form that has a generally uniform thickness of 0.254 milimeter (10 mils), is disposed and exposed perpendicularly to the path of said 640 nanometer wavelength light,

said composition comprising, in intimate, physically interdispersed admixture:

(a) polymethylmethacrylate;

(b) from 1 to 99 weight percent, based on total weight of the composition, of a copolymer

of an alkenyl aromatic monomer and a monomeric vinyl acid containing polymerized in the copolymer between 95 and 50 weight percent of the alkenyl aromatic monomer based on copolymer weight,

said alkenyl aromatic monomer being of the Formula:

$$CH_2{=}\overset{\displaystyle G}{\overset{|}{C}}{-}Ar, \qquad (I)$$

wherein G is hydrogen or methyl and Ar is an aromatic radical (including alkyl- and halo-ring-substituted aromatic units) of from 6 to 10 carbon atoms,

said vinyl acid monomer being acrylic acid, methacrylic acid, itaconic acid or mixtures thereof.

These compositions can also comprise as a third component (c) from 20 to 70 weight percent, based on total weight of the compositions, of a mass-made ABS-type resin that comprises:

from 14 to 28 parts by weight of a cyanoalkene of the Formula:

$$CH_2{=}\overset{\displaystyle R}{\overset{|}{C}}{-}CN \qquad (III)$$

wherein R is hydrogen or a lower alkyl unit containing not more than 4 carbon atoms therein;

from 86 to 72 parts by weight of an alkenyl aromatic monomer of the Formula (I); and

between 5 and 18 weight percent rubber.

Also contemplated within the scope of the present invention are transparent shaped articles of the hereinbefore-described blend.

The present invention involves physically-improved and transparent polymeric compositions, wherein the essential components are

(a) polymethylmethacrylate;

(b) a copolymer of (A) vinyl aromatic monomer with one or more vinyl acids; and optionally

(c) at least one mass-made ABS-type resin.

It is generally advantageous in the blend composition for the polymethylmethacrylate component (a) to be present in the blend in an amount of at least 10 and preferably at least 20 or more weight percent. Up to 40 to 50 percent by weight polymethylmethacrylate is generally used in the present polymer blends. A larger amount of polymethylmethacrylate is particularly suitable when the blend involves some ABS-type component (c) in combination with copolymeric component (b).

These guidelines apply even when one or more additional, compatible polymers are included in the blend composition other than component (c).

When a compatible polymer, other than or with component (c) material, is employed in a blend product in accordance with the invention, it is usually preferable to maintain the content of same at or below 20 weight percent, more advantageously, at or below 10 weight percent.

Transparency of any given multi-component polymeric system is achieved when the minor component of the involved blend (wherein the given ingredients have different refractive indexes) is dispersed such that its domain sizes are well below the wave length of light which, roughly, is about one-tenth of a micrometer (0.1 μm). It appears that both polymethylmethacrylate and copolymers of styrene with acrylic acid are quite readily dispersible into sub-micron domains. Also, consideration must be maintained of the fact evident in the above-noted U.S. 4,083,896 that it is generally more difficult to blend diverse polymers having greatly different melt viscosities.

It is surprising that excellent blend products of polymethylmethacrylate with such (A) alkenyl aromatic/vinyl acid copolymers as styrene acrylic acid are readily obtained even if large melt viscosity differences exist between the blend components.

Even more surprising and unexpected is the fact that certain of the so-called "mass-made" ABS-type resins (component (c)) are observed to be rendered transparent upon being blended with polymethylmethacrylate and alkenyl aromatic/vinyl acid copolymer.

ABS and like type resins are plastics which have been known for many years. They are well characterized in such sources as "ABS Plastics" by Costas H. Basdekis, published in 1964 as part of its <u>Plastics Application Series</u> by Reinhold Publishing Corporation of New York. They are generally tough materials having good solvent- and impact-resistant qualities.

In the mass technique for ABS manufacture, the rubber, such as polybutadiene is directly dissolved in a mixture of styrene and acrylonitrile followed by polymerization of the mass under the influence of agitation which is continued at least until the occurrence of the rubber phase inversion, continuing polymerization either in mass or in a suitable suspension of the mass to a desired degree of conversion. On devolatilization, the desired ABS plastic product is obtained for utilization as component (c).

Other conventional preparations of ABS resins which are not mass technique involve such procedures as: (i) blending any one or more of various suitable rubber latices with a styrene-acrylonitrile resin; and (ii) polymerizing styrene and acrylonitrile in the presence of a preformed rubber in latex form.

ABS and like type component (c) resins prepared by the mass-made technique are typically characterizable by the relatively large size of the rubber particles therein which groups of rubber particles usually have a weight average diameter of from 0.3 μm to 5 μm and often from 0.5 μm to 5 μm. These complex rubber particles generally have a rubber phase containing occluded styrene-acrylonitrile polymer and are of a size that is well above that which will cause light scattering. The particles in such ABS are dispersed in a continuous or matrix phase of styrene--acrylonitrile copolymer.

In accordance with the present invention blends of polymethylmethacrylate with alkenyl

aromatic/vinyl acid copolymer, even when combined with further mass-made ABS resins, are satisfactorily transparent. However, many corresponding blends with emulsion-made ABS resins do not provice transparent compositions but, as would be expected, remain opaque.

The mass-made ABS resins, when employed as component (c) in practice of the present invention are admixed with mixtures of components (a) and (b), the order of adding such constituents (a), (b) and (c) being unimportant.

These mass-made ABS resins can be satisfactorily obtained, for example, generally as taught in U.S. Patent No. 3,627,855. They usually contain copolymerized therein from 14 to 28 parts by weight acrylonitrile and from 86 to 72 parts by weight of styrene to form the styrene-acrylonitrile copolymers with between 5 and 18 percent by weight of butadiene polymer dispersed in the copolymer and having styrene-acrylonitrile copolymer occluded therein and grafted thereto.

Equivalent mass-made acrylonitrile-butadiene-styrene-type resins for present purposes can be prepared with component variations in place of or in admixture with the respective acrylonitrile, styrene and butadiene polymer ingredients.

For the acrylonitrile-butadiene-styrene type resin, other cyanoalkylenes may be utilized along with or in place of acrylonitrile, such as α-methacrylonitrile, of the Formula:

$$CH_2=C(R)-CN, \qquad (III)$$

wherein R is hydrogen or a lower alkyl unit containing not more than 4 carbon atoms.

Butadiene polymer is oftentimes preferred as the elastomeric or rubbery substrate component for the mass-made component (c) acrylonitrile-butadiene-styrene resins suitable for polymer blends in accordance with the present invention.

The elastomer utilized in preparation of such acrylonitrile-butadiene-styrene resins may also be selected from a wide variety of generally sulfur-vulcanizable materials or mixtures thereof additional to polybutadiene. It can be natural rubber or a synthetic conjugated diolefin homopolymer rubber (or an elastomeric copolymer composition of between 25 and 90 weight percent) of a 1,3-diene of the Formula:

$$H_2C=C(X)-CH=CH_2 \qquad (IV)$$

wherein X is a hydrogen, chlorine or methyl radical.

Such synthetic conjugated diolefin polymer rubbers are polymers of: butadiene-1,3; isoprene; 2,3-dimethylbutadiene-1,3; and copolymers of mixtures of one or more such butadienes in a proportion of preferably at least 75 weight percent of such butadienes and, for example, of up to 25 weight percent of one or more monoethylenic compounds which contain a

$$CH_2=\overset{R_1}{\overset{|}{C}}-R_2 \qquad (IVA)$$

group wherein at least one of the connected $R_1$ and/or $R_2$ valences is attached to an electronegative group, that is, a group which substantially increases the electrical dissymmetry or polar character of the molecule.

Examples of compounds which contain the Formula (IVA) grouping and are copolymerizable with butadienes are: the Formula (I) monomers, especially styrene; the unsaturated carboxylic acids and their esters, nitriles and amides, such as acrylic acid, methyl acrylate, ethyl acrylate, methyl methacrylate, acrylonitrile, α-methacrylonitrile and methacrylamide; vinylpyridines, such as 2-vinylpyridine and 2-methyl-5-vinylpyridine; methyl vinyl ketone; and methyl isopropenyl ketone (all of which are also copolymerizable with styrene).

Examples of such conjugated diolefin polymer synthetic rubbers are: polybutadiene; polyisoprene; butadiene-styrene copolymers; and butadiene-acrylonitrile copolymers. The synthetic rubber may be solution-prepared or emulsion-prepared, be it a stereo-specific variety or otherwise.

Other conventional unsaturated sulfur-vulcanizable rubbers may also be used as the elastomeric substrate material for the acrylonitrile-butadiene-styrene type resins, such as a rubber terpolymer of ethylene,

propylene and a copolymerizable non-conjugated diene, such as 1,4-hexadiene, dicyclopentadiene, dicyclooctadiene, methylenenorbornene, ethylidenenorbornene and tetrahydroindene. The analogous fluorocarbon, silicone and polysulfide rubbers may also be employed as an elastomer.

It is generally most advantageous to utilize styrene for preparation of the component (b) copolymers, as well as in the mass-made ABS of component (c) resins capable of being included in the transparent blends of the invention.

In addition to styrene and in place of or in mixture(s) therewith, other alkenyl aromatic monomers may be utilized in components (b) and (c). These are of the Formula:

$$CH_2{=}\overset{G}{\overset{|}{C}}{-}Ar \qquad (I)$$

wherein G is hydrogen or methyl and Ar is an aromatic radical (including various alkyl and halo-ring-substituted aromatic units) of from 6 to 10 carbon atoms. Such monomers include: α-methylstyrene; ortho-, meta- and/or paravinyl toluene; vinyl naphthalene; dimethyl styrene; t-butyl styrene; the several chlorostyrenes (such as the mono- and dichloro-variants); and the several bromostyrenes (such as the mono- and dibromo-variants).

The vinyl acids that can be employed for preparation of the component (b) copolymers are acrylic acid, methacrylic acid and itaconic acid.

Most advantageously, acrylic acid is the vinyl acid to utilize in provision of the component (b) copolymers. Yet, the dicarboxylic itaconic acid is also effective for the purpose, as is methacrylic acid.

The quantity of polymerized vinyl acid in the copolymeric component (b) compounds is advantageously between 5 and 50 weight percent, based on the weight of the resulting copolymer thereof with the alkenyl aromatic monomer(s) of Formula (I). More advantageously, not more than 25 weight percent of acrylic acid or other vinyl acid monomer is copolymerized in the component (b) material.

To make the blends of the present invention, the desired appropriate proportions of components (a) and (b) (with optional component (c)) are generally physically admixed in such a way as will provide a generally homogeneous blending thereof insofar as can be determined by the unaided eye. Most advantageously, the blends are prepared by melt blending of the components by mechanical admixture thereof on or in intensive compounding apparatus such as extruders, masticating roll apparatus of the 2-roll type, Banbury mixers, and Brabender units. The melt blending is done at a temperature adequate to heat plastify the components being mixed but at a temperature less than that which would cause undesired polymer decomposition.

The blends pursuant to this inveniton can contain other additives that are oftentimes included in such compositions. These include antioxidants, dyes, fillers (including pulverulent, particulate or fibrous fillers); stabilizers; mineral oil and other plasticizers; and blowing agents.

As will be apparent to those skilled in the art, the physical properties and other characteristics of the present transparent blends depend, on both the particular types of the (a), (b) and (c) components employed, the presence or absence of various additives, and/or the ABS resin utilized. Many product variations are obtainable by component and composition selection pursuant to the above teachings.

The invention is additionally demonstrated by the accompanying Figure 1.

Figure 1 is a ternary phase diagram which shows that transparent binary and ternary blends of polmethylmethacrylate and poly(styrene-acrylic acid) are obtainable.

In connection with the Figure, also in the following Examples, transparency measurements were made by determination of the absorbancy of specimens with regard to light having a 640 nanometer wave length. To do this, compression molded samples of the material whose transparency was desired to be tested, were employed, each of which had a molded thickness of approximately 0.25 millimeters (10 mils). Each molded specimen to be tested was placed in a special holder therefor in a Beckman (Type B) spectrophotometer, wherein its absorbance of 640 nm light from a standard source was determined. The special holder maintained the specimen being tested in a constant position at a distance of 60 millimeters from the back wall of the chamber in the spectrophotometer. The absorbance value taken was, when necessary, normalized to 0.25 millimeters in cases where the actual thickness of the sample

deviated from this standardized dimension. For purposes of practical transparency evaluation(s), specimens tested that had an absorbance value below about 0.12 appeared clear and transparent to the unaided eye. Increasing absorbance values greater than about 0.12, indicate specimens which are more cloudy and increasingly opaque to the unaided eye.

Figure 1 is a ternary phase diagram indicating transparency or lack thereof in various blends of polymethylmethacrylate blends and poly-(styrene-acrylic acid). Some of these are within and some are outside the scope of the present invention. Illustrated are: two-component blends of polymethylmethacrylate with a styrene-acrylonitrile copolymer containing 29.7 weight percent combined acrylonitrile, obtained from The Dow Chemical Company under the trade designation "TYRIL 880" (outside the scope of the present invention); two-component blends of polymethylmethacrylate with a styrene acrylic acid copolymer containing 7.5 weight percent combined acrylic acid (within the scope of the present invention); and two-component blends of "TYRIL 880" with the specified styrene acrylic acid copolymer (outside the scope of the present invention); and three-component blends of the same polymethylmethacrylate with the specified styrene acrylic acid copolymer and "TYRIL 880 (within the scope of the present invention). Compositions of the transparent polymer blends within the scope of the present invention are marked by open circles while those of the opaque products outside the scope of the present invention are marked by solid circles. Comparative

compositions outside the scope of the present invention but exhibiting transparency are marked by an open circle with an "X" in the center.

The following illustrative examples show the benefit of the present invention. In the examples, all parts and percentages are given on a weight basis and all temperature readings (unless otherwise specified) are in degrees Celsius (°C).

First Illustration

A blend of 25 parts by weight of "LUCITE 140" brand polymethylmethacrylate and 75 parts by weight of styrene acrylic acid copolymer containing copolymerized therein 7.5 percent acrylic acid was prepared from clear granules of the former and granules of the latter. This was done by physically combining the granular components followed by melting of the physical mixture on a 76 x 203 millimeter (3 x 8 inch) two-roll mill. The front roll of the mill was supplied with steam at 1.5-1.7 MPa (200-240 pounds per square inch) gauge so that its surface temperature was maintained in the range of 160-190°C. The back roll of the mill was not provided with steam. After melting of the mass, supplied to the mill, it initially appeared to be opaque and heterogeneous. After about two minutes of milling, however, the melt suddenly became clear. The roll-blending was continued for total time period of about 5 minutes.

A hot polymer mass was removed from the rolls and subsequently compression molded into specimens for testing.

An analogous blend outside the scope of the present invention was prepared from 25 parts by weight of a copolymer of 91 percent methyl methacrylate and 9 percent acrylic acid (in place of polymethylmethacrylate) with 75 parts by weight of the same styrene acrylic acid copolymer as used above. The resulting blend was quite opaque.

The clear blend that was prepared in accordance with the present invention had: a Notched Izod Impact value of 12.3 Joules/meter (J/m) (0.23 ft-lbs/in); a Vicat Heat Distortion temperature of 116°C; and a Melt Flow Rate under Condition "I" of 8.1 gms/10 min.

The opaque blend had a Notched Izod value of 10.7 J/m (0.20 ft-lbs/in); a Vicat Heat Distortion temperature of 118°C; and a Melt Flow Rate of 14.1 gms/10 min.

Second Illustration

It is well known that mixtures of polystyrene and polymethylmethacrylate form opaque blends.

In order to investigate the lower practical limit of copolymerized acrylic acid in styrene acrylic acid copolymers in order to obtain transparent blends in mixtures thereof with polymethylmethacrylate, a series of experiments was run.

A number of styrene acrylic acid (SAA) copolymers were made into different blends with "LUCITE 140" polymethylmethacrylate (PMMA). Each of the involved styrene acrylic acid copolymers had a weight average molecular weight in excess of 200,000.

The actual polymer blendings were done for various time periods using a Brabander "Plasti-Cord" mixer with an associated bath temperature of 180°C and a 63 revolutions per minute mixing speed.

The results obtained were as set forth in the following Table I.

TABLE I - Transparency Ratings of Various Blends of Styrene Acrylic Acid (SAA) and Polymethylmethacrylate (PMMA)

| Sample No. | % AA[1] In SAA | SAA/-PMMA Ratio In Blend | Mixing Time (minutes) | Applied Torque (m-gms)[2] | Absorbancy Value |
|---|---|---|---|---|---|
| II-1* | 2 | 25:75 | 3 | 2190 | 1.090 |
| II-2* | 2 | 25:75 | 6 | 1780 | 1.136 |
| II-3* | 2 | 75:25 | 3 | 1640 | 1.713 |
| II-4* | 2 | 75:25 | 6 | 1385 | 1.548 |
| II-5 | 5 | 25:75 | 3 | 2110 | 0.064 |
| II-6 | 5 | 25:75 | 6 | 2020 | 0.061 |
| II-7 | 5 | 75:25 | 3 | 1870 | 0.107 |
| II-8 | 5 | 75:25 | 6 | 1630 | 0.078 |

*Compartive Example, not an example of the present invention.
[1]AA = acrylic acid.
[2]m-gms = meter grams.

In comparison, similarly prepared polyblends of "STYRON 686" Brand polystyrene, obtained from The Dow Chemical Company and the same "LUCITE 140" polymethylmethacrylate had measured absorbancy values of at least, and generally greater than 2 and were quite opaque in appearance to the naked eye.

Third Illustration

To demonstrate the transparency enhancement obtained when polymethylmethacrylate is added, a number of different two-component blends of styrene-acrylonitrile (SAN) and styrene acrylic acid copolymers and different three-component blends of polymethylmethacrylate with styrene-acrylonitrile and styrene acrylic acid copolymers were prepared and tested. The blending was done generally in accordance with the procedure described in the foregoing Second Illustration. The results obtained are set forth in the following Table II. The percentages of acrylonitrile (AN) in the SAN and acrylic acid (AA) in the SAA are shown in Table II in parentheses.

TABLE II - Transparency Ratings of Various Blends of Styrene-acrylonitrile Polymer (SAN) and Styrene-Acrylic Acid Polymer (SAA) Improved in Certain Instances with Polymethylmethacrylate (PMMA)

| Sample | Composition % | | | |
|---|---|---|---|---|
| No. | PMMA | SAN | SAA | Absorbance |
| III-1* | 0 | 50 (24% AN) | 50 (7.5% AA) | 0.168 |
| III-2* | 0 | 50 (29.7% AN) | 50 (7.5% AA) | 0.227 |
| III-3 | 10 | 10 (24% AN) | 80 (7.5% AA) | 0.055 |
| III-4 | 20 | 40 (29.7% AN) | 40 (7.5% AA) | 0.083 |
| III-5 | 20 | 40 (34.1% AN) | 40 (7.5% AA) | 0.051 |

*Comparative Example, not an example of the present invention.

Fourth Illustration

It has been shown that certain blends of particular styrene-acrylonitrile copolymers having copolymerized therein 29.7 percent acrylonitrile and styrene acrylic acid copolymers having copolymerized therein 7.5 percent acrylic acid are opaque. This illustration demonstrates that normally-opaque blends of these two diverse styrene copolymers are rendered transparent in blends thereof containing only relatively small amounts of polymethylmethacrylate. A series of blends was prepared utilizing therein SAN containing 29.7 percent AN and SAA containing 7.5 percent AA in the proportions set forth with the transparency results obtained in the following Table III.

TABLE III - Transparency Ratings of Various Blends of Styrene-acrylonitrile Polymer (SAN) and Styrene Acrylic Acid Polymer (SAA) and Styrene-acrylonitrile Polymers and Polymethylmethacrylate (PMMA) and SAN/SAA/PMMA

| Sample No. | Composition Percent SAN | SAA | PMMA | Absorbance |
|---|---|---|---|---|
| IV-1* | 25 | 75 | 0 | 0.269 |
| IV-2* | 25 | 0 | 75 | 0.234 |
| IV-3 | 65 | 25 | 10 | 0.068 |
| IV-4 | 25 | 65 | 10 | 0.071 |

*Comparative Example, not an example of the present invention.

Note: The composition of Sample IV-2 lies just outside the literature-reported range of compatibility for blends of styrene-acrylonitrile polymer and polymethylmethacrylate.

Fifth Illustration

Following the general pocedure of the Second Illustration, blends were prepared containing 75 parts by weight polymethylmethacrylate and 25 parts by weight styrene acrylic acid copolymer (containing 7 percent acrylic acid) of differing molecular weights. The molecular weights referred to were weight average molecular weights ($M_w$) and were determined by gel permeation chromatography. The mixtures were blended three minutes. Blending data are included in Table IV.

TABLE IV - Transparencies and Tensile Strengths of Various Styrene Acrylic Acid Polymer/-Polymethylmethacrylate (SAA/PMMA) Blends

| Sample No. | $M_w$ of SAA | Applied Torque In Mixing (m-gms) | Tensile Strength in MPa (in psi) | Absorbance |
|---|---|---|---|---|
| V-1 | 30,000 | 1420 | 20.3 (2950) | 0.065 |
| V-2 | 60,000 | 1500 | 29.6 (4300) | 0.078 |
| V-3 | 100,000 | 2425 | 29.0 (4200) | 0.077 |
| V-4 | 150,000 | 2700 | 37.9 (5500) | 0.048 |

Additionally, analogous blends of 75 parts by weight styrene acrylic acid and 25 parts by weight polymethylmethacrylate were prepared and found to be transparent after three minutes of blending time in the Brabender mixer.

Sixth Illustration

The general procedure of the Second Illustration was used to demonstrate preparing ternary blends of a styrene acrylic acid copolymer containing 7.5 weight percent acrylic acid admixed with "LUCITE 140" polymethylmethacrylate and "ABS 500". ABS 500 was obtained from The Dow Chemical Company and was a mass-made material containing relatively large-sized rubber particles having a weight average diameter in the range of 0.3 to 5 μm. The particles of rubber contained occlusions of poly(styrene-acrylonitrile) larger than about 0.1 μm. The ABS 500 contained 13.5 weight percent butadiene-type rubber and the soluble fraction contained 23.5 weight percent acrylonitrile. In the preparation of each of the ternary blend batches, the styrene acrylic acid polymer and polymethylmethacrylate were first mixed on the rolls to achieve transparency, after which the appropriate amount of mass-made "ABS 500" was added with compounding continued for an additional 5 minutes with frequent folding of the molten polymer blanket during the blending operation.

The results obtained are shown in Table V, below.

TABLE V - Transparencies of Various Styrene Acrylic Acid Resin (SAA), Polymethylmethacrylate (PMMA), Acrylonitrile-butadiene-styrene Resin (ABS) Ternary Blends

| Sample No. | Weight Percentages of Components In the Composition: SAA | "LUCITE 140" | "ABS 500" | Absorbance |
|---|---|---|---|---|
| VIII-1 | 80 | 20 | 0 | 0.042 |
| VIII-2 | 72 | 18 | 10 | 0.081 |
| VIII-3 | 64 | 16 | 20 | 0.108 |
| VIII-4* | 48 | 12 | 40 | 0.185 |
| VIII-5* | 32 | 8 | 60 | 0.294 |

The results of operation pursuant to the invention in ternary blends is evident in the data of the above Table V.

Desirable rsults are also obtained by making transparent blends of the same or different polymethylmethacrylate resins utilizing varying styrene acrylic acid resins and copolymeric equivalents thereof and/or differing ABS and ABS-type resins in place of those employed in the foregoing Illustrations but within the heretobefore-disclosed composition parameters.

## Claims

1. A transparent, thermoplastic polymeric composition having a light absorbance value in the 640 nanometer wave length that is not greater than 0.12 when said composition, in a solid shaped specimen form that has a generally uniform thickness of 0.25 millimeters (10 mils), is disposed and exposed perpendicularly to the path of said 640 nanometer wavelength light,

said composition comprising, in intimate, physically interdispersed admixture:

(a) polymethylmethacrylate;

(b) from 1 to 99 weight percent, based on total weight of the composition, of a copolymer of an alkenyl aromatic monomer and a monomeric vinyl acid containing polymerized in the copolymer between 95 and 50 weight percent of the alkenyl aromatic monomer based on copolymer weight,

said alkenyl aromatic monomer being of the Formula:

$$CH_2{=}\overset{G}{\overset{|}{C}}{-}Ar, \qquad (I)$$

wherein G is hydrogen or methyl and Ar is an aromatic radical (including alkyl and halo-ring-substituted aromatic units) of from 6 to 10 carbon atoms,

said vinyl acid monomer being acrylic acid, methacrylic acid, itaconic acid or mixtures thereof.

2. The composition of Claim 1, also comprising: (c) from 20 to 70 weight percent based on total weight of the composition of a mass-made ABS-type resin that comprises:

from 14 to 28 parts by weight of a cyanoalkene of the Formula:

$$CH_2=\overset{R}{\overset{|}{C}}-CN \qquad (III)$$

wherein R is hydrogen or a lower alkyl unit containing not more than 4 carbon atoms therein;

from 86 to 72 parts by weight of an alkenyl aromatic monomer of the Formula (I); and

between 5 and 18 weight percent rubber.

3. The composition of Claim 1, wherein the said component (b) copolymer contains at least 75 weight percent of the Formula (I) monomer therein polymerized.

4. The composition of Claim 1, containing at least 10 weight percent polymethylmethacrylate component (a).

5. The composition of Claim 1, containing 40 to 50 weight percent of said polymethylmethacrylate component (a).

6. A composition in accordance with Claim 1 wherein said Formula (I) monomer is styrene.

7. A composition in accordance with Claim 1 wherein the vinyl acid monomer is acrylic acid.

8. A composition in accordance with Claim 1 wherein:

said component (b) is a copolymer of styrene and acrylic acid.

9. A composition according to Claim 2 wherein the rubber is in the form of particles having a weight average diameter of from 0.3 to 5 μm.

10. A transparent shaped article fabricated from a composition that is in accordance with the compositions of Claim 1.

0179941

1/1

Fig. 1

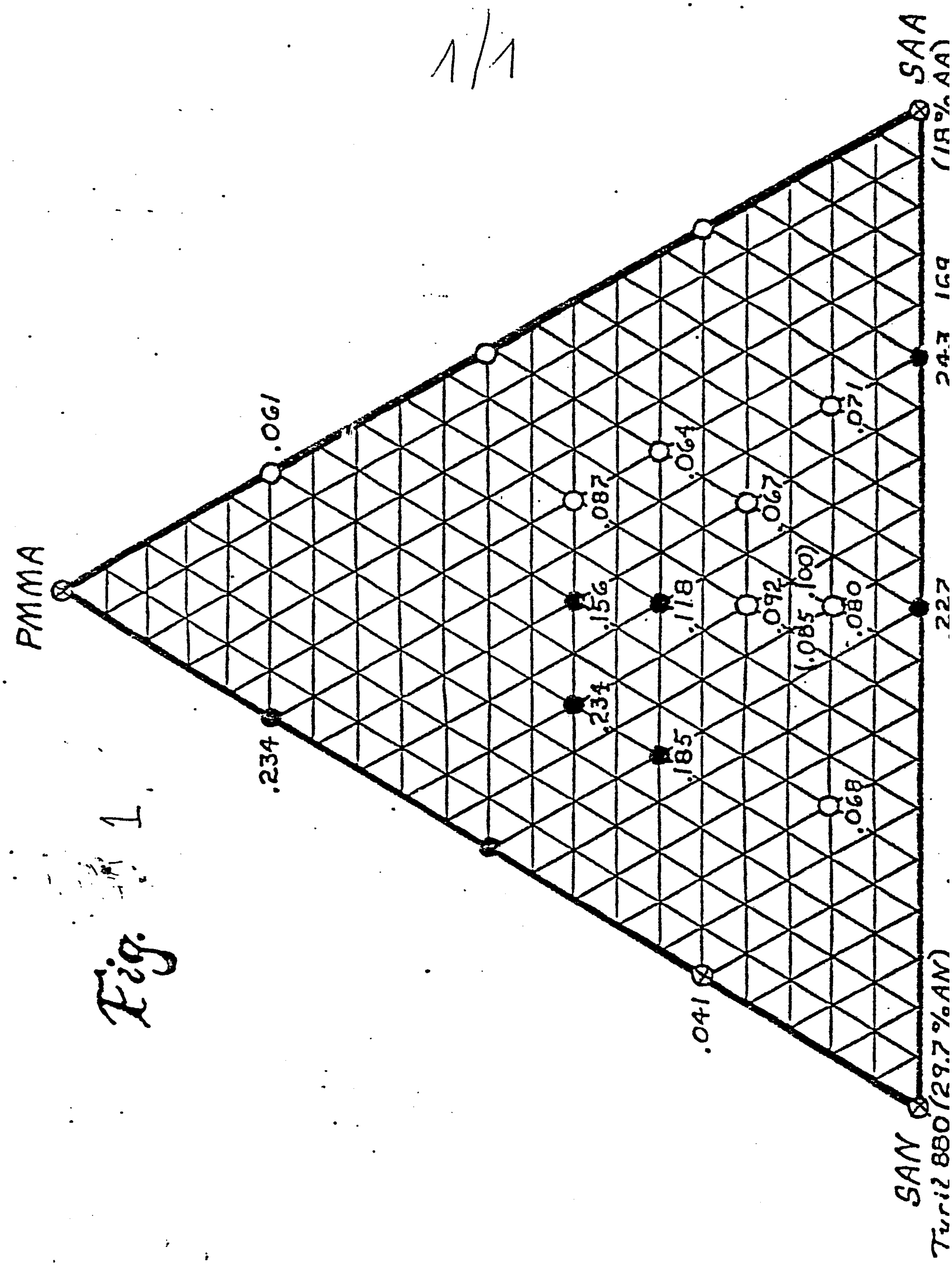

European Patent Office

0179941

Application number

# EUROPEAN SEARCH REPORT

EP 84 11 3103

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 056 247 (DOW) * Claims * ----- | 1 | C 08 L 33/12<br>C 08 L 25/08<br>C 08 L 55/02 |
| | | | TECHNICAL FIELDS SEARCHED (Int. Cl.4) |
| | | | C 08 L |

The present search report has been drawn up for all claims

| Place of search | Date of completion of the search | Examiner |
|---|---|---|
| THE HAGUE | 10-06-1985 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82